# EUROPÄISCHE PATENTSCHRIFT

(11) **EP 1 771 997 B1**
(45) Veröffentlichungstag und Bekanntmachung des Hinweises auf die Patenterteilung: **09.09.2009**
(21) Anmeldenummer: 06764173.8
(22) Anmeldetag: 14.07.2006
(51) Int. Cl.: H04L 29/06

(54) **VERFAHREN ZUR STEMPELUNG BELIEBIGER ETHERNET-FRAMES IN VERBINDUNG MIT STANDARD-ETHERNET**
METHOD FOR STAMPING ANY ETHERNET FRAMES IN CONNECTION WITH AN ETHERNET STANDARD
PROCEDE D'ESTAMPILLAGE DE TRAMES ETHERNET QUELCONQUES EN RELATION AVEC L'ETHERNET STANDARD

(30) Priorität: 08.08.2005 DE 10537376
(43) Veröffentlichungstag der Anmeldung: 11.04.2007
(73) Patentinhaber: SIEMENS AKTIENGESELLSCHAFT, 80333 München (DE)
(72) Erfinder: STEINDL, Günter, 92284 Poppenricht (DE)
(86) Internationale Anmeldenummer: PCT/EP2006/064257
(87) Internationale Veröffentlichungsnummer: WO 2007/017340

(56) Entgegenhaltungen:
- EP-A2- 1 104 962
- US-A1- 2003 115 369
- US-B1- 6 717 956

## Beschreibung

Die Erfindung betrifft ein Verfahren sowie eine Vorrichtung zur Einbringung eines Stempels in beliebige Ethernet-Frames in Verbindung mit einem Standard-Ethernet-Controller.

Ein derartiges Verfahren bzw. eine derartige Vorrichtung kommt in lokalen Netzwerken, insbesondere in verteilten Systemen in der Automation, für die eine präzise Zeitbasis wichtig ist, zum Einsatz. Unter Automatisierungssystemen sind hier Systeme zu verstehen, welche mit Hilfe technischer Mittel bestimmte Operationen ohne Einflussnahme des Menschen teilweise oder ganz nach vorgegebenen Programmen durchführen. Operationen bezeichnen in diesem Zusammenhang z.B. Fertigungsprozesse, Montageprozesse, Transportprozesse, Prozesse zur Qualitätskontrolle etc., die insbesondere im industriellen Umfeld ablaufen.

Eine hochgenaue Synchronisation am Ethernet wie durch das in IEEE 1588 spezifizierte Precision-Time-Protocol (PTP) benötigt eine Zeitstempelung der Ethernet-Telegramme zum Empfangszeitpunkt. Eine Verlängerung der Telegramme, um den Stempel anzufügen, wird von den Media-Access-Controllern (MACs) nicht unterstützt.

Die bekannten Lösungen legen den Zeitstempel als Präfix oder als Postfix am Ethernet-Frame ab, wodurch Standard-Ethernet-Controller nicht mehr verwendet werden können. Dieses Problem wird durch eine zusätzliche Hardware proprietär gelöst, die üblicherweise am Media-Independent-Interface (MII) zwischen einem Ethernet-Controller und einem "Physical Layer" (PHY) angeschlossen wird.

Aus US 2003/0115369 A1 ist ein Verfahren bekannt, bei dem einer Vielzahl von an einem Netzwerk angeschlossenen Geräten mittels eines "Zeitraum-Paketes", das den Anfang eines Frames mit einer Vielzahl von Zeitfenstern kennzeichnet, die besagten Zeitfenster zusammen mit einem Offset und der Dauer des jeweiligen Zeitfensters zugewiesen werden, während der Pakete auf das Netzwerk gesendet werden dürfen. Die "Zeitraum-Pakete" selbst sind dabei z.B. Standard-Ethernet-Frames, wobei die Informationen über die Zeitfenster gewissermaßen die Anwendungsdaten des Ethernet-Frames darstellen. Die eigentliche Zeitstempelung zur Synchronisation erfolgt hierbei durch einen Regler, der die in einem Bus-Adapter des jeweiligen Gerätes ankommenden "Zeitraum-Pakete" mit einem Zeitstempel versieht, nachdem der im Adapter enthaltene Media-Access-Controller die Header der Ethernet-Frames entfernt hat.

Aus US 6 717 956 B1 ist ein Verfahren bekannt, bei dem zur Vergrößerung der Kapazität eines virtuellen Netzwerkes die Standard-Adressen in den Headern der Datenpakete durch verkürzte Adressen, die innerhalb des virtuellen Netzwerkes eindeutig sind, ersetzt werden, wenn die Datenpakete innerhalb des virtuellen Netzwerkes weitergeleitet werden.

Der Erfindung liegt die Aufgabe zugrunde, beliebige Ethernet-Frames mit einem Zeitstempel zu versehen, wobei durch den allgemeinen Ethernet-Standard IEEE 802.X definierte Standard-Ethernet-Controller verwendbar sind.

Diese Aufgabe wird durch ein Verfahren sowie durch eine Vorrichtung mit den in Anspruch 1 bzw. Anspruch 6 angegebenen Merkmalen gelöst. Die abhängigen Ansprüche stellen verschiedene Ausführungsbeispiele dar.

Jeder Ethernet-Controller unterstützt den so genannten RAW-Mode, in dem die Prüfungen des Ethernet-Telegramms auf ein Minimum beschränkt sind. Betreibt man den Ethernet-Controller in diesem Mode und verlagert die Prüfung der Media-Access-Control (MAC)-Zieladresse in die Vorrichtung zur Stempelung beliebiger Ethernet-Frames, so steht die MAC-Zieladresse mit ihren 6 Byte für den Stempel zur Verfügung. Durch den gewählten Ort der Vorrichtung zwischen Ethernet-Controller und Physical Layer (PHY) kann die Vorrichtung den Datenstrom zwischen Ethernet-Controller und PHY beliebig manipulieren.

In einer besonders vorteilhaften Form der Ausführung sind für den Stempel vier Byte der sechs Byte langen MAC-Zieladresse vorgesehen, während die restlichen zwei Byte die Original-MAC-Zieladresse kodieren, wodurch der volle Funktionsumfang der MAC-Zieladresse, wie z.B. mehrere Unicast-Adressen oder zusätzliche Multicast-Adressen, erhalten bleibt, da durch eine Software an jedem Ethernet-Controller der Stempel entnommen und der Ethernet-Frame wieder mit der Original-MAC-Zieladresse versehen werden kann.

In einer ebenso vorteilhaften Form der Ausführung ist die Vorrichtung ebenso wie der PHY über Lesen und Schreiben durch das Seriell-Management-Interface- (SMI-) Protokoll des in dem allgemeinen Ethernet-Standard IEEE 802.X vorgeschriebenen Media-Independent-Interface (MII) steuerbar, durch das ein Adressraum von 32x32x2 Byte Lesend und Schreibend adressierbar ist, und für ihre Steuerung z.B. der Adressraum (28-31)xYYx2 Byte vorgesehen ist, wodurch noch weitere 28 PHYs [(0-27)xYYx2 Byte] ansteuerbar bleiben.

Vorteilhafterweise weist die Vorrichtung Mittel zur Eintragung des Zeitstempels für das in IEEE 1588 spezifizierte Precision-Time-Protocol (PTP) auf. Diese Funktionalität steht an jedem denkbaren Ethernet-Controller mit SMI zur Verfügung.

Bei vielen Protokollen für Ethernet sind Multicast-Telegramme vorgesehen. Dabei ist die Vorrichtung vorteilhafterweise als Vorfilter zur Lastreduktion am lokalen Interface verwendbar.

Im Folgenden wird die Erfindung anhand der Figuren näher beschrieben und erläutert. Es zeigen:
- FIG 1: Vorrichtung zur Stempelung beliebiger Ethernet-Frames zwischen Ethernet-Controller und Physical Layer
- FIG 2: Einen nach dem allgemeinen Ethernet-Standard IEEE 802.X definierten Ethernet-Frame

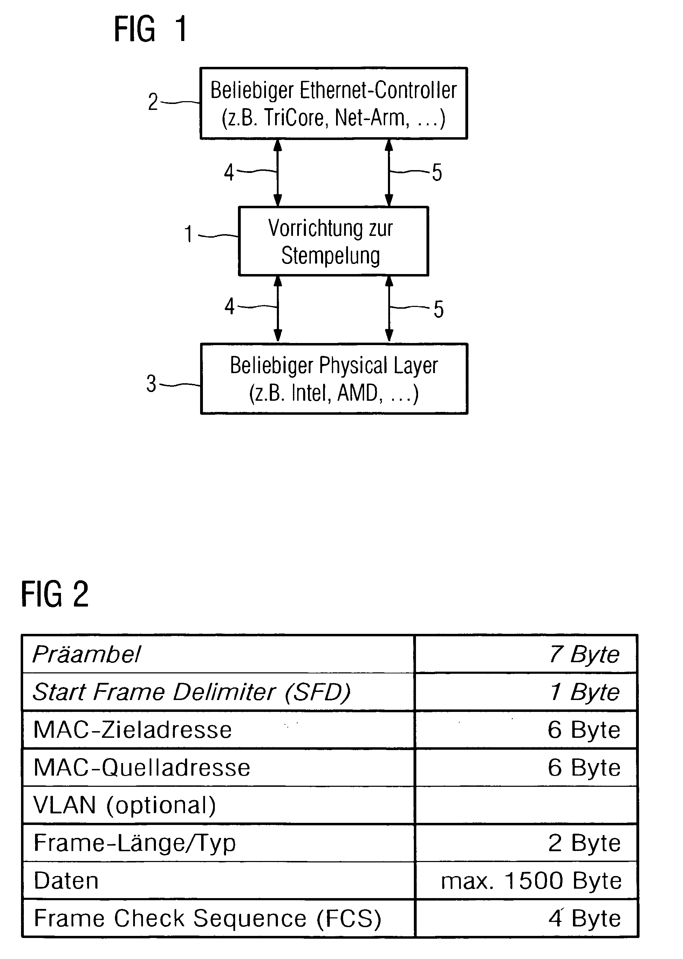

FIG 1 zeigt eine Vorrichtung zur Stempelung 1 beliebiger Ethernet-Frames zwischen einem beliebigen Ethernet-Controller 2 (z.B. TriCore oder Net-Arm) und einem beliebigen Physical Layer 3 (z.B. Intel oder AMD). Jeder Ethernet-Controller unterstützt das in dem allgemeinen Ethernet-Standard IEEE 802.X vorgeschriebene Media Independent Interface (MII) 5 mit seinem Seriell Management Interface (SMI) 4. Die Steuerung der Vorrichtung zur Stempelung 1 erfolgt wie die des Physical Layer 3 über Lesen und Schreiben durch das SMI-Protokoll.

FIG 2 zeigt einen nach dem allgemeinen Ethernet-Standard IEEE 802.X definierten Ethernet-Frame. Dabei zählt das Präambel-Feld schon dem Namen nach nicht zum eigentlichen Ethernet-Frame, ebenso wie der sich anschließende Start Frame Delimiter (SFD), der mit der Sequenz 10101011 den Beginn des eigentlichen Ethernet-Frames markiert. Dieser beginnt mit der im erfindungsgemäßen Verfahren beschriebenen Media-Access-Control- (MAC-) Zieladresse und der darauf folgenden MAC-Quelladresse. Die Länge des optionalen VLAN-Feldes variiert je nach Standard und beträgt z.B. in der IEEE 802.1Q-Norm 4 Bytes. Das eigentliche Daten-Feld hat eine Mindestlänge von 46 Byte, ihm folgt die Frame Check Sequence (FCS), die den Ethernet-Frame beschließt. Sie enthält einen Wert, der mittels eines Cyclic Redundancy Checks berechnet wird.

Durch den gewählten Ort am MII ist das beschriebene Verfahren und die beschriebene Vorrichtung unabhängig von der physikalischen Übertragungsart, Glasfaser oder Kupfer, und von der Übertragungsgeschwindigkeit, 10 MBd bis 10 GBd, da in allen Betriebsarten ein MII bzw. GMII im allgemeinen Ethernet-Standard IEEE 802.X definiert ist.

Weitere Vorteile der genannten Ausführungsformen liegen in der einfachen Hardware-Integration, den geringen Kosten und in den vielen Nutzungsmöglichkeiten.

Zusammenfassend betrifft die Erfindung ein Verfahren sowie eine Vorrichtung zur Stempelung beliebiger Ethernet-Frames. Der Erfindung liegt die Aufgabe zugrunde, beliebige Ethernet-Frames mit insbesondere einem Zeitstempel zu versehen, wobei nach IEEE 802.X definierte Standard-Ethernet-Controller verwendbar sind. Diese Aufgabe wird durch eine neuartige Methode derart gelöst, dass zwischen einem im RAW-Mode betriebenen Ethernet-Controller und einem "Physical Layer" der Stempel in einen Bereich der Media-Access-Control (MAC)-Zieladresse abgelegt wird, während die Original-MAC-Zieladresse vorteilhafterweise in dem verbliebenen Bereich kodiert wird.

## Patentansprüche

1. Verfahren zur Einbringung eines Zeitstempels in beliebige Ethernet-Frames,
**dadurch gekennzeichnet,**
- **dass** ein Standard-Ethernet-Controller (2) in einem derartigen Modus betrieben wird, in dem keine Filterung auf eine MAC-Zieladresse durchgeführt wird, und
- **dass** der Zeitstempel in einen Bereich der MAC-Zieladresse des Ethernet-Frames eingetragen wird.

2. Verfahren nach Anspruch 1,
wobei für den Zeitstempel vier Byte der sechs Byte langen MAC-Zieladresse vorgesehen sind und die restlichen zwei Byte die Original-MAC-Zieladresse kodieren.

3. Verfahren nach einem der Ansprüche 1 oder 2,
wobei eine Prüfung der MAC-Zieladresse und die Stempelung der Ethernet-Frames in einer zusätzlichen Vorrichtung (1) vorgenommen werden, die zwischen dem Standard-Ethernet-Controller (2) und einem Physical Layer (3) vorgesehen ist.

4. Verfahren nach Anspruch 3,
wobei die Steuerung der zusätzlichen Vorrichtung (1) ebenso wie die des Physical Layer (3) über Lesen und Schreiben durch das Seriell-Management-Interface- (4) Protokoll des in dem allgemeinen Ethernet-Standard IEEE 802.X vorgeschriebenen Media-Independent-Interface (5) erfolgt.

5. Verfahren nach Anspruch 4,
wobei der Zeitstempel für das in IEEE 1588 spezifizierte Precision-Time-Protocol eingetragen wird.

6. Vorrichtung (1) zur Einbringung eines Zeitstempels in beliebige Ethernet-Frames,
**dadurch gekennzeichnet,**
- **dass** die Vorrichtung (1) so ausgerüstet ist, dass sie zwischen einem in einem derartigen Modus, in dem keine Filterung auf eine MAC-Zieladresse durchgeführt wird, betriebenen Standard-Ethernet-Controller (2) und einem Physical Layer (3) betreibbar ist und
- **dass** die Vorrichtung (1) Mittel zur Eintragung des Zeitstempels in einen Bereich der MAC-Zieladresse enthält.

7. Vorrichtung nach Anspruch 6,
wobei für den Zeitstempel vier Byte der sechs Byte langen MAC-Zieladresse vorgesehen sind und die restlichen zwei Byte die Original-MAC-Zieladresse kodieren.

8. Vorrichtung nach einem der Ansprüche 6 oder 7,
wobei die Vorrichtung (1) ebenso wie der Physical Layer (3) über Lesen und Schreiben durch das Seriell-Management-Interface- (4) Protokoll des in dem allgemeinen Ethernet-Standard IEEE 802.X vorgeschriebenen Media-Independent-Interface (5) steuerbar ist.

9. Vorrichtung nach Anspruch 8,
wobei die Vorrichtung (1) Mittel zur Eintragung des Zeitstempels für das in IEEE 1588 spezifizierte Precision-Time-Protocol aufweist.

10. Vorrichtung nach einem der Ansprüche 8 oder 9,
wobei die Vorrichtung (1) bei Verwendung eines Ethernet-Protokolls, bei dem Multicast-Telegramme vorgesehen sind, als Vorfilter zur Lastreduktion am lokalen Interface verwendbar ist.

11. System zur Einbringung eines Zeitstempels in beliebige Ethernet-Frames mit mindestens einem Standard-Ethernet-Controller (2), mit mindestens einem Physical Layer (3) und mit mindestens einer Vorrichtung (1) nach einem der Ansprüche 6 bis 10.

## Claims

1. Method for applying a timestamp to any Ethernet frames,
**characterised in that**
- a standard Ethernet controller (2) is operated in a mode of a type in which no MAC destination address filtering is performed, and
- the timestamp is entered in an area of the MAC destination address of the Ethernet frame.

2. Method according to claim 1,
wherein four bytes of the six-byte MAC destination address are provided for the timestamp and the remaining two bytes encode the original MAC destination address.

3. Method according to one of claims 1 or 2,
wherein checking of the MAC destination address and stamping of the Ethernet frames are performed in an additional apparatus (1) which is provided between the standard Ethernet controller (2) and a Physical Layer (3).

4. Method according to claim 3,
wherein the additional apparatus (1), like the Physical Layer (3), is controlled via reading and writing by means of the Serial Management Interface (4) protocol of the Media Independent Interface (5) specified in the general Ethernet standard IEEE 802.X.

5. Method according to claim 4,
wherein the timestamp for the Precision Time Protocol (PTP) specified in IEEE 1588 is entered.

6. Apparatus (1) for applying a timestamp to any Ethernet frames,
**characterised in that**
- the apparatus (1) is equipped in such a way that it can be operated between a standard Ethernet controller (2) operated in a mode of a type in which no MAC destination address filtering is performed, and a Physical Layer (3), and
- the apparatus (1) includes means for entering the timestamp in an area of the MAC destination address.

7. Apparatus according to claim 6,
wherein four bytes of the six-byte MAC destination address are provided for the timestamp and the remaining two bytes encode the original MAC destination address.

8. Apparatus according to one of claims 6 or 7,
wherein the apparatus (1), like the Physical Layer (3), can be controlled via reading and writing by means of the Serial Management Interface (4) protocol of the Media Independent Interface (5) specified in the general Ethernet standard IEEE 802.X.

9. Apparatus according to claim 8,
wherein the apparatus (1) has means for entering the timestamp for the Precision Time Protocol specified in IEEE 1588.

10. Apparatus according to one of claims 8 or 9,
wherein, when an Ethernet protocol in which multicast telegrams are provided is used, the apparatus (1) can be used as a pre-filter for reducing load at the local interface.

11. System for applying a timestamp to any Ethernet frames, said system having at least one standard Ethernet controller (2), having at least one Physical Layer (3) and having at least one apparatus (1) according to one of claims 6 to 10.

## Revendications

1. Procédé pour mettre une estampille de temps dans n'importe quelle trame Ethernet,
**caractérisé**
- **en ce que** l'on fait fonctionner un dispositif ( 2 ) de commande d'Ethernet Standard dans un mode dans lequel un filtrage n'est pas effectué sur une adresse de destination MAC, et
- **en ce que** l'on appose l'estampille de temps dans une partie de l'adresse de destination MAC de la trame Ethernet.

2. Procédé suivant la revendication 1,
dans lequel il est prévu, pour l'estampille de temps, quatre octets de l'adresse de destination MAC longue de six octets et les deux octets restants codent l'adresse de destination MAC d'origine.

3. Procédé suivant la revendication 1 ou 2,
dans lequel on effectue un contrôle de l'adresse de destination MAC et l'estampillage de la trame Ethernet dans un dispositif ( 1 ) supplémentaire, qui est prévu entre le dispositif ( 2 ) de commande de l'Ethernet Standard et une couche ( 3 ) physique.

4. Procédé suivant la revendication 3,
dans lequel la commande du dispositif ( 1 ) supplémentaire, tout comme celle de la couche ( 3 ) physique, s'effectue par lecture et écriture par le protocole Seriell-Management-Interface ( 4 ) de l'Interface-Media-Independent prescrite dans la norme Ethernet générale IEEE 802.X.

5. Procédé suivant la revendication 4,
dans lequel l'estampille de temps est apposée pour le Precision-Time-Protocol spécifié dans IEEE 1588.

6. Dispositif ( 1 ) pour mettre une estampille de temps dans n'importe quelle trame Ethernet,
**caractérisé**
- **en ce que** le dispositif ( 1 ) est équipé de manière à ce qu'il peut fonctionner entre un dispositif ( 2 ) de commande Ethernet Standard, qui fonctionne dans un mode
dans lequel un filtrage ne s'effectue pas sur une adresse de destination MAC et une couche ( 3 ) physique, et
- **en ce que** le dispositif ( 1 ) comporte des moyens pour mettre l'estampille de temps dans une partie de l'adresse de destination MAC.

7. Disposition suivant la revendication 6,
dans lequel il est prévu pour l'estampille de temps quatre octets de l'adresse de destination MAC longue de six octets et les deux octets restants codent l'adresse de destination MAC d'origine.

8. Disposition suivant la revendication 6 ou 7,
dans lequel le dispositif ( 1 ) tout comme la couche ( 3 ) physique peuvent être commandés par lecture et écriture par le protocole Seriell-Management-Interface ( 4 ) d'une Media-Independent-Interface ( 5 ) prescrite dans la norme Ethernet générale IEEE 802.X.

9. Disposition suivant la revendication 8,
dans lequel le dispositif ( 1 ) a des moyens d'apposition de l'estampille de temps pour le Precisition-Time-Protocol spécifié dans IEEE 1588.

10. Disposition suivant la revendication 8 ou 9,
dans lequel le dispositif ( 1 ) peut être utilisé lorsque l'on utilise un protocole Ethernet dans lequel des télégrammes multicast sont prévus comme préfiltres pour la réduction de charge à l'interface locale.

11. Système pour mettre une estampille de temps dans n'importe quelle trame Ethernet, comprenant au moins un dispositif ( 2 ) de commande Ethernet Standard, au moins une couche ( 3 ) physique et au moins un dispositif ( 1 ) suivant l'une des revendications 6 à 10.
